# FASCICULE DE BREVET EUROPEEN

(11) **EP 1 628 111 B1**
(45) Date de publication et mention de la délivrance du brevet: **29.10.2008**
(21) Numéro de dépôt: 05291608.7
(22) Date de dépôt: 28.07.2005
(51) Int. Cl.: F41G 7/30

(54) **Procédé et dispositif pour la réalisation d'une liaison optique par éclats lumineux**
Verfahren und Vorrichtung um eine optische Verbindung mit einer Lichtbake zu erzeugen
Method and apparatus for implementing an optical link based with a light beacon

(30) Priorité: 20.08.2004 FR 0409014
(43) Date de publication de la demande: 22.02.2006
(73) Titulaire: MBDA France, 75016 Paris (FR)
(72) Inventeur: Teneze, Bernard, 18570 Trouy (FR)
(74) Mandataire: Bonnetat, Christian

(56) Documents cités:
- WO-A-20/04064274
- FR-A- 2 274 887
- FR-A- 2 583 523
- US-A- 4 173 777
- US-A- 5 062 586
- US-A- 5 332 176
- US-A1- 2002 154 293

## Description

La présente invention concerne un procédé et un dispositif pour la réalisation d'une liaison optique par éclats lumineux entre une lampe à éclats et un récepteur desdits éclats lumineux, tout particulièrement appropriée à être mise en oeuvre dans les dispositifs de localisation et de guidage de missiles, tels que par exemple celui décrit dans le document US-4 710 028 (FR-2 583 523).

Par exemple, le document WO 2004/064274 décrit un dispositif dans lequel on réalise une liaison optique entre une lampe à éclats et un dispositif de localisation d'un mobile s'éloignant dudit dispositif de localisation, ladite liaison optique étant formée par une suite d'éclats lumineux dont chacun d'eux est engendré par une décharge électrique produite par des moyens capacitifs et appliquée à ladite lampe à éclats.

Dans les dispositifs connus de ce type, la lampe à éclats peut être montée à bord dudit missile ou bien être disposée à poste fixe, la liaison optique comportant alors un miroir monté à bord du missile et renvoyant lesdits éclats lumineux vers ledit récepteur.

Pour pouvoir assurer des liaisons optiques de grande longueur, il est nécessaire que ladite lampe à éclats soit puissante et consomme donc beaucoup d'énergie. Il en résulte qu'une telle lampe à éclats doit être volumineuse et être pourvue de moyens aptes à évacuer vers l'extérieur la chaleur dont elle est le siège.

La présente invention a pour objet de remédier à ces inconvénients en permettant de réaliser une liaison optique par éclats lumineux à faible consommation d'énergie avec une lampe à éclats peu volumineuse ne nécessitant aucune dissipation de chaleur.

A cette fin, selon l'invention, le procédé pour la réalisation d'une liaison optique telle que spécifiée ci-dessus est remarquable en ce que :
- on réalise lesdits moyens capacitifs sous la forme d'un agencement d'une pluralité de condensateurs ; et
- dans ledit agencement, on commande de façon programmée le branchement desdits condensateurs de façon que la capacité résultante desdits moyens capacitifs croisse d'un éclat au suivant.

Ainsi, grâce à la présente invention, on peut moduler la puissance de ladite lampe à éclats en fonction du temps de façon qu'elle soit réduite, lorsque le mobile est proche du dispositif de localisation, et qu'elle augmente progressivement avec la distance lampe à éclats-dispositif de localisation, la puissance nécessaire à la portée maximale du mobile n'étant fournie qu'en fin de portée. Une telle modulation réduit donc la consommation d'énergie par la lampe à éclats, ce qui permet d'en diminuer l'échauffement et donc le volume.

On remarquera que le document FR-2 274 887 décrit un appareil de réglage de la puissance de sortie d'un faisceau de guidage optique émis par une diode laser et destiné au guidage d'un engin ou analogue.

Pour la mise en oeuvre du procédé selon l'invention, il est avantageux, d'une part, que lesdits moyens capacitifs comportent une pluralité de branches de circuit comprenant chacune un condensateur et un interrupteur commandé, lesdites branches de circuit étant montées en parallèle les unes sur les autres entre l'anode et la cathode de ladite lampe à éclats, et que, d'autre part, le dispositif comporte :
- un générateur de haute tension pour l'alimentation desdits condensateurs ; et
- des moyens de commande desdits interrupteurs commandés permettant d'une part de charger lesdits condensateurs à partir dudit générateur de haute tension et, d'autre part, de décharger lesdits condensateurs dans ladite lampe à éclats de façon que la décharge électrique correspondant à un éclat soit supérieure à la décharge électrique correspondant à l'éclat précédant et inférieure à la décharge électrique correspondant à l'éclat suivant.

De préférence, lesdits moyens capacitifs comportent un condensateur supplémentaire monté en parallèle sur lesdites branches de circuit entre l'anode et la cathode de ladite lampe à éclats.

Dans un mode de réalisation avantageux :
- les condensateurs desdites branches de circuit présentant des capacités différentes et, du premier au dernier, sont classés par ordre de capacité croissante ;
- le condensateur supplémentaire présente une capacité inférieure à celle dudit premier condensateur ayant la plus petite capacité parmi les condensateurs desdites branches de circuit ;
- le premier éclat de la suite résulte de la décharge du seul condensateur supplémentaire ;
- le deuxième éclat de la suite résulte de la décharge conjointe dudit condensateur supplémentaire et dudit premier condensateur desdites branches de circuit ;
- le troisième éclat de la suite résulte de la décharge conjointe dudit condensateur supplémentaire et desdits premier et deuxième condensateurs desdites branches du circuit ;
- de façon générale, l'éclat intermédiaire de rang i de la suite (i étant un nombre entier inférieur au nombre total d'éclats de la suite) résulte de la décharge conjointe dudit condensateur supplémentaire et des i-1 premiers condensateurs desdites branches de circuit ; et
- le dernier éclat de la suite résulte de la décharge conjointe dudit condensateur supplémentaire et de la totalité desdits condensateurs desdites branches de circuit.

Ainsi, il est possible d'obtenir, en fin de portée du mobile, une puissance élevée pour ladite lampe à éclats sans utiliser des condensateurs de capacité élevée.

De préférence, le dispositif conforme à la présente invention comporte des moyens programmés en fonction de la course dudit mobile, pilotant lesdits moyens de commande desdits interrupteurs commandés et déterminant l'espace de temps entre deux éclats lumineux successifs. Avantageusement, de tels moyens de pilotage sont initialisés, éventuellement avec retard, par le départ dudit mobile.

L'espace de temps entre deux éclats lumineux successifs peut être fixe et le même pour tous les éclats de la suite. Cependant, il est peut être variable, par exemple selon une loi exponentielle.

Dans le cas usuel où ladite lampe à éclats est du type comportant une électrode de déclenchement, le dispositif selon l'invention comporte un générateur de très haute tension pour alimenter ladite électrode de déclenchement et ce générateur est commandé par lesdits moyens de commande desdits interrupteurs.

Les figures du dessin annexé feront bien comprendre comment l'invention peut être réalisée. Sur ces figures, des références identiques désignent des éléments semblables.

La figure 1 illustre schématiquement la localisation d'un missile.

La figure 2 est le schéma synoptique d'un exemple de réalisation de l'émetteur d'impulsions lumineuses monté à bord dudit missile.

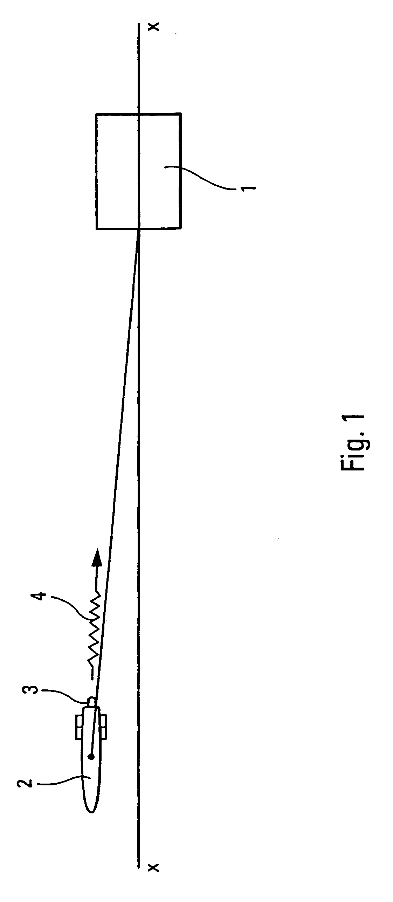

Sur la figure 1, on a représenté un dispositif 1 apte à localiser un missile 2 par rapport à un axe de référence X-X (par exemple un axe de visée), ledit missile 2 s'éloignant à vitesse constante du dispositif de localisation 1. Ce dernier est par exemple du type décrit dans le document US-4 710 028 (FR-2 583 523).

Aux fins de sa localisation par le dispositif 1, le missile 2 comporte une lampe à éclats 3, apte à émettre des impulsions lumineuses 4 en direction dudit dispositif 1, qui comporte un récepteur desdites impulsions (non autrement représenté).

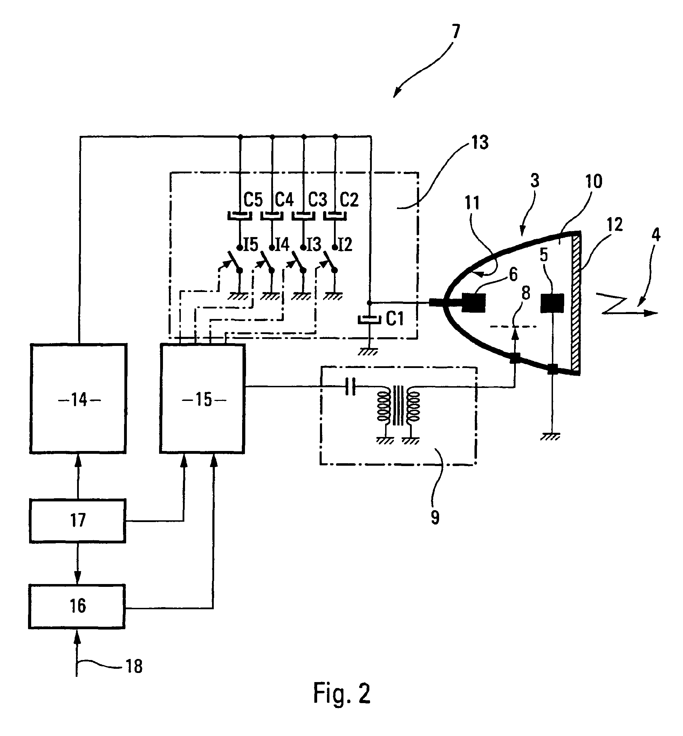

Comme cela est représenté sur la figure 2, la lampe à éclats 3 comporte une cathode 5 reliée à la masse, une anode 6 alimentée par un dispositif de commande 7 et une électrode de déclenchement 8 alimentée par un générateur de très haute tension 9 (par exemple de l'ordre de 10 kv). La lampe à éclats comporte une cavité 10 formant un réflecteur 11 et obturée par une fenêtre optique 12. De plus, la cavité 10 est emplie d'un gaz rare, par exemple du xénon.

Le dispositif de commande 7, monté à bord du missile 1, comporte des moyens capacitifs 13, un générateur de haute tension 14 (par exemple 500 V) apte à charger lesdits moyens capacitifs 13, un dispositif de commande 1 5 commandant lesdits moyens capacitifs 13 et le générateur de très haute tension 9, un générateur programmé de tops de synchronisation 16 pilotant le dispositif de commande 15 et une source d'alimentation électrique 17, par exemple une pile thermique, alimentant le générateur 14, le dispositif 15 et le générateur 16.

Dans l'exemple de réalisation montré par la figure 2, les moyens capacitifs 13 comportent cinq condensateurs C1 à C5 montés en parallèle, les anodes desdits condensateurs étant reliées en commun, d'une part, au générateur de haute tension 14 et, d'autre part, à l'anode 6 de la lampe à éclats 3.

Par ailleurs, la cathode du condensateur C1 est reliée directement à la masse, alors que les cathodes des condensateurs C2 à C5 sont respectivement reliées à la masse par l'intermédiaire d'interrupteurs 12 à 15 (par exemple des transistors MOS), commandés par le dispositif de commande 1 5.

De préférence, la capacité du condensateur C5 est supérieure à celle du condensateur C4, qui est elle-même supérieure à celle du condensateur C3, qui est elle-même supérieure à la capacité du condensateur C2, qui est elle-même supérieure à celle du condensateur C1. Par exemple, si la capacité du condensateur C1 est égale à c1, les capacités c2 à c5 des condensateurs C2 à C5 peuvent être respectivement égales à 2c1, 3c1, 4c1 et 5c1.

Puisque le condensateur C1 est en liaison permanente avec le générateur 14, il est chargé par ce dernier.

Lors du départ du missile 2, un ordre de commande est adressé au générateur de tops programmé 16 par une ligne de commande 18, sur laquelle peut éventuellement être interposé un dispositif de temporisation (non représenté). En réponse à cet ordre de commande, le générateur 16 pilote le dispositif 15 pour qu'il ferme les interrupteurs 12 à 15, de sorte que les condensateurs C2 à C5 sont chargés par le générateur 14. Lorsqu'un interrupteur a été fermé, il reste dans cet état.

Ensuite, le fonctionnement du dispositif 7 et de la lampe à éclats 3 se déroule de la façon suivante :
- à un instant t1, le générateur 16 émet un premier top qui est adressé au dispositif de commande 15. Celui-ci active le générateur de très haute tension 9, de sorte que l'électrode de déclenchement 8 est portée à cette très haute tension. Comme, par ailleurs, la tension aux bornes du condensateur C1 est appliquée entre la cathode 5 et l'anode 6, il s'ensuit la génération d'un arc électrique entre ces dernières, ainsi que la décharge dudit condensateur C1. La puissance de cet arc bref, qui forme un premier éclat lumineux, est donc proportionnelle à la charge électrique accumulée dans le seul condensateur C1, qui elle-même est fonction de la capacité de ce condensateur C1. A la fin dudit premier éclat lumineux, le dispositif de commande 15, piloté par le générateur 16, désactive le générateur à très haute tension 9 et ferme l'interrupteur 12, de sorte que les condensateurs C1 et C2 sont rechargés par le générateur 14 ;
- à un instant t2 = t1 + Δt1 postérieur à t1, le générateur 16 émet un deuxième top et le dispositif de commande 15, qui le reçoit, active le générateur de très haute tension 9. Il en résulte que la lampe 3 engendre un deuxième éclat lumineux dont la puissance est proportionnelle à la somme des charges électriques accumulées dans les condensateurs C1 et C2. A la fin du deuxième éclat lumineux, le dispositif de commande 15 désactive le générateur à très haute tension 9 et ferme l'interrupteur 13. Les condensateurs C1, C2 et C3 sont alors chargés par le générateur 14 ;
- à un instant t3 = t2 + Δt2 postérieur à t2, le générateur 16 émet un troisième top et, en réponse, le dispositif de commande 15 active le générateur de très haute tension 9. Ainsi, de façon analogue à ce qui est décrit ci-dessus, la lampe 3 engendre un troisième éclat lumineux dont la puissance est proportionnelle à la somme des charges électriques accumulées dans les condensateurs C1, C2 et C3. A la fin du troisième éclat lumineux, le dispositif de commande 15, piloté par le générateur 16, désactive le générateur à très haute tension 9 et ferme l'interrupteur 14. Les condensateurs C1, C2, C3 et C4 sont alors rechargés par le générateur 14 ;
- à un instant t4 = t3 + Δt3 postérieur à t3, le générateur 16 émet un quatrième top et, en réponse, le dispositif de commande 15 active le générateur de très haute tension 9. Ainsi, de façon analogue à ce qui est décrit ci-dessus, la lampe 3 engendre un quatrième éclat lumineux dont la puissance est proportionnelle à la somme des charges électriques accumulées dans les condensateurs C1, C2, C3 et C4. A la fin du quatrième éclat lumineux, le dispositif de commande 15 désactive le générateur à très haute tension 9 et ferme l'interrupteur 15. Les condensateurs C1, C2, C3, C4 et C5 sont alors rechargés par le générateur 14 ;
- à un instant t5 = t4 + Δt4 postérieur à t4, le générateur 16 émet un cinquième top et, en réponse, le dispositif de commande 15 active le générateur de très haute tension 9. Ainsi, de façon analogue à ce qui est décrit ci-dessus, la lampe 3 engendre un cinquième éclat lumineux dont la puissance est proportionnelle à la somme des charges électriques accumulées dans les condensateurs C1, C2, C3, C4 et C5.

On voit qu'ainsi que, éclat après éclat, la puissance desdits éclats croît jusqu'à un maximum lorsque le missile 2 atteint sa portée maximale.

Les instants t1 à t5 et les espaces de temps Δt1 à Δt4 sont programmés dans le générateur 16. Lesdits espaces Δt1 à Δt4 peuvent être constants et égaux. Au contraire, ils peuvent être variables.

De ce qui précède, on conçoit aisément que, grâce à la présente invention, on assure un fonctionnement stable à ladite lampe à éclats 3, avec une variation de puissance programmée, apte à éviter une saturation du détecteur d'éclats (capteur CCD ou CMOS) au départ du missile 2. De plus, on réalise une économie d'énergie importante, permettant d'augmenter la portée du missile 2 pour une même puissance. La réduction importante de l'échauffement de la lampe 3 qui en résulte permet de réduire l'encombrement du bloc optique associé à ladite lampe et de réaliser ce dernier avec des matériaux moins critiques, en ce qui concerne la tenue aux hautes températures, que ceux usuellement utilisés.

## Revendications

1. Procédé pour la réalisation d'une liaison optique entre une lampe à éclats (3) et un dispositif (1) de localisation d'un mobile (2) s'éloignant dudit dispositif de localisation, ladite liaison optique étant formée par une suite d'éclats lumineux (4) dont chacun d'eux est engendré par une décharge électrique produite par des moyens capacitifs (13) et appliquée à ladite lampe à éclats (3),
**caractérisé en ce que :**
- on réalise lesdits moyens capacitifs (13) sous la forme d'un agencement d'une pluralité de condensateurs (C1 à C5) ; et
- dans ledit agencement, on commande de façon programmée le branchement desdits condensateurs (C1 à C5) de façon que la capacité résultante desdits moyens capacitifs (13) croisse d'un éclat au suivant.

2. Dispositif pour la réalisation d'une liaison optique, mettant en oeuvre le procédé de la revendication 1,
**caractérisé en ce que :**
- lesdits moyens capacitifs (13) comportent l'agencement d'une pluralité de branches de circuit (C2, 12 à C5, 15) comprenant chacune un condensateur (C2 à C5) et un interrupteur commandé (12 à 15), lesdites branches de circuit étant montées en parallèle les unes sur les autres entre l'anode (6) et la cathode (5) de ladite lampe à éclats (3) ; et
- ledit dispositif comporte :
• un générateur de haute tension (14) pour l'alimentation desdits condensateurs (C2 à C5) et
• des moyens de commande (15) desdits interrupteurs commandés (12 à 15) permettant d'une part, de charger lesdits condensateurs (C2 à C5) à partir dudit générateur de haute tension (14) et, d'autre part, de décharger lesdits condensateurs dans ladite lampe à éclats (3) de façon que la décharge électrique correspondant à un éclat soit supérieure à la décharge électrique correspondant à l'éclat précédant et inférieure à la décharge électrique correspondant à l'éclat suivant.

3. Dispositif selon la revendication 2,
**caractérisé en ce que** lesdits moyens capacitifs (13) comportent un condensateur supplémentaire (C1) monté en parallèle sur lesdites branches de circuit (C2, 12 à C5, 15) entre l'anode (6) et la cathode (5) de ladite lampe à éclats (3).

4. Dispositif selon la revendication 3,
**caractérisé en ce que**:
- les condensateurs (C2 à C5) desdites branches de circuit (C2, 12 à C5, 15) présentant des capacités différentes et, du premier (C2) au dernier (C5) sont classés par ordre de capacité croissante ;
- le condensateur supplémentaire (C1) présente une capacité inférieure à celle dudit premier condensateur (C2) ayant la plus petite capacité parmi les condensateurs (C2 à C5) desdites branches de circuit (C2, 12 à C5, 15) ;
- le premier éclat de la suite résulte de la décharge du seul condensateur supplémentaire (C1) :
- le deuxième éclat de la suite résulte de la décharge conjointe dudit condensateur supplémentaire (C1) et dudit premier condensateur (C2) desdites branches de circuit ;
- le troisième éclat de la suite résulte de la décharge conjointe dudit condensateur supplémentaire (C1) et desdits premier et deuxième condensateurs (C2, C3) desdites branches de circuit ;
- de façon générale, l'éclat intermédiaire de rang i de la suite (i étant un nombre entier inférieur au nombre d'éclats de la suite) résulte de la décharge conjointe dudit condensateur supplémentaire (C1) et des i-1 premiers condensateurs desdites branches de circuit ; et
- le dernier éclat de la suite résulte de la décharge conjointe dudit condensateur supplémentaire (C1) et de la totalité desdits condensateurs desdites branches de circuit.

5. Dispositif selon l'une des revendications 2 à 4,
**caractérisé en ce qu'**il comporte des moyens de pilotage programmés (16) pilotant lesdits moyens de commande (15) desdits interrupteurs commandés (12 à 15).

6. Dispositif selon la revendication 5,
**caractérisé en ce qu'**il comporte des moyens (18) pour initialiser lesdits moyens de pilotage programmés (16) au départ dudit mobile (2).

7. Dispositif selon l'une des revendications 5 ou 6,
**caractérisé en ce que** l'espace de temps entre deux éclats lumineux successifs est fixe et est le même pour tous les éclats de la suite.

8. Dispositif selon l'une des revendications 5 ou 6,
**caractérisé en ce que** l'espace de temps entre deux éclats lumineux successifs est variable.

9. Dispositif selon l'une des revendications 2 à 8, dans lequel ladite lampe à éclats (3) est du type comportant une électrode de déclenchement (8),
**caractérisé en ce qu'**il comporte un générateur de très haute tension (9) pour alimenter ladite électrode de déclenchement (8) et **en ce que** ledit générateur de très haute tension (9) est commandé par lesdits moyens (15) commandant lesdits interrupteurs (I2 à I5).

## Claims

1. A method for producing an optical link, between a flashlamp (3) and a device (1) for locating a missile (2) moving away from said locating device, said optical link being formed by a series of light flashes (4) each of which is generated by an electrical discharge produced by capacitive means (13) and applied to said flashlamp (3),
**characterized in that:**
- said capacitive means (13) are produced in the form of an arrangement of a plurality of capacitors (C1 to C5); and
- the connection of said capacitors (C1 to C5) within said arrangement is controlled in a programmed manner in such a way that the resultant capacitance of said capacitive means (13) increases from one flash to the next.

2. A device for producing an optical link, implementing the method of claim 1,
**characterized in that:**
- said capacitive means (13) comprise the arrangement of a plurality of circuit branches (C2, I2 to C5, I5) each comprising a capacitor (C2 to C5) and a controlled switch (12 to I5), said circuit branches being connected in parallel to one another between the anode (6) and the cathode (5) of said flashlamp (3); and
- said device includes:
• a high-voltage generator (14) for supplying said capacitors (C2 to C5) and
• means (15) for controlling said controlled switches (12 to I5), making it possible, on the one hand, to charge said capacitors (C2 to C5) from said high-voltage generator (14) and, on the other hand, to discharge said capacitors into said flashlamp (3) so that the electrical discharge corresponding to a flash is larger than the electrical discharge corresponding to the preceding flash and smaller than the electrical discharge corresponding to the next flash.

3. The device as claimed in claim 2,
**characterized in that** said capacitive means (13) include an additional capacitor (C1) connected in parallel to said circuit branches (C2, I2 to C5, I5) between the anode (6) and the cathode (5) of said flashlamp (3).

4. The device as claimed in claim 3,
**characterized in that:**
- the capacitors (C2 to C5) of said circuit branches (C2, I2 to C5, I5) which, from the first (C2) to the last (C5), have different capacitances, are classified in order of increasing capacitance;
- the additional capacitor (C1) has a lower capacitance than said first capacitor (C2) having the smallest capacitance among the capacitors (C2 to C5) of said circuit branches (C2, I2 to C5, I5);
- the first flash of the series results from the discharge of just the additional capacitor (C1);
- the second flash of the series results from the combined discharge of said additional capacitor (C1) and said first capacitor (C2) of said circuit branches;
- the third flash of the series results from the combined discharge of said additional capacitor (C1) and said first and second capacitors (C2, C3) of said circuit branches;
- in general, the intermediate flash of index i of the series (i being an integer smaller than the number of flashes in the series) results from the combined discharge of said additional capacitor (C1) and the i-1 first capacitors of said circuit branches; and
- the last flash of the series results from the combined discharge of said additional capacitor (C1) and all of said capacitors of said circuit branches.

5. The device as claimed in one of claims 2 to 4,
**characterized in that** it includes programmed drive means (16) that drive said means (15) for controlling said controlled switches (I2 to I5).

6. The device as claimed in claim 5,
**characterized in that** it includes means (18) for initializing said programmed drive means (16) at the launch of said missile (2).

7. The device as claimed in one of claims 5 or 6,
**characterized in that** the time interval between two successive light flashes is fixed and is the same for all the flashes of the series.

8. The device as claimed in one of claims 5 or 6,
**characterized in that** the time interval between two successive light flashes can be varied.

9. The device as claimed in one of claims 2 to 8, in which said flashlamp (3) is of the type that includes a trip electrode (8),
**characterized in that** it includes a very high-voltage generator (9) for supplying said trip electrode (8) and **in that** said very high-voltage generator (9) is controlled by said means (15) for controlling said switches (I2 to I5).

## Patentansprüche

1. Vorrichtung zur Erzeugung einer optischen Verbindung zwischen einer Blitzlampe (3) und einer Vorrichtung (1) zur Lokalisierung eines beweglichen Objekts (2), das sich von der Lokalisierungsvorrichtung entfernt, wobei die optische Verbindung durch eine Aufeinanderfolge von Lichtblitzen (4) gebildet ist, von denen jeder durch eine elektrische Entladung hervorgerufen wird, die durch kapazitive Mittel (13) erzeugt wird und an die Blitzlampe (3) angelegt wird,
**dadurch gekennzeichnet, dass:**
- die kapazitiven Mittel (13) in Form einer Anordnung einer Vielzahl von Kondensatoren (C1 bis C5) gebildet sind; und
- in der Anordnung der Anschluss der Kondensatoren (C1 bis C5) auf programmierte Weise derart gesteuert wird, dass die aus den kapazitiven Mitteln (13) resultierende Kapazität von einem Blitz zum anderen wächst.

2. Vorrichtung zur Erzeugung einer optischen Verbindung, wobei das Verfahren von Anspruch 1 angewendet wird,
**dadurch gekennzeichnet, dass:**
- die kapazitiven Mittel (13) eine Anordnung einer Vielzahl von Stromzweigen (C2, I2 bis C5, I5) umfassen, die jeweils einen Kondensator (C2 bis C5) und einen gesteuerten Schalter (12 bis I5) umfassen, wobei die Stromzweige parallel zueinander zwischen der Anode (6) und der Kathode (5) der Blitzlampe (3) geschaltet sind; und
- die Vorrichtung umfasst:
• einen Hochspannungsgenerator (14) zur Speisung der Kondensatoren (C2 bis C5) und
• Mittel zur Steuerung (15) der gesteuerten Schalter (I2 bis 15), die es erlauben, einerseits die Kondensatoren (C2 bis C5) ausgehend vom Hochspannungsgenerator (14) zu laden und andererseits die Kondensatoren in der Blitzlampe (3) zu entladen, so dass die elektrische Entladung, die einem Blitz entspricht, größer ist als die elektrische Entladung, die dem vorhergehenden Blitz entspricht, und geringer ist als die elektrische Entladung, die dem folgenden Blitz entspricht.

3. Vorrichtung nach Anspruch 2,
**dadurch gekennzeichnet, dass** die kapazitiven Mittel (13) einen zusätzlichen Kondensator (C1) umfassen, der parallel an den Stromzweigen (C2, I2 bis C5, I5) zwischen der Anode (6) und der Kathode (5) der Blitzlampe (3) geschaltet ist.

4. Vorrichtung nach Anspruch 3,
**dadurch gekennzeichnet, dass:**
- die Kondensatoren (C2 bis C5) der Stromzweige (C2, I2 bis C5, I5) unterschiedliche Kapazitäten aufweisen und vom ersten (C2) bis zum letzten (C5) nach steigender Kapazität geordnet sind;
- der zusätzliche Kondensator (C1) eine Kapazität aufweist, die geringer ist als jene des ersten Kondensators (C2), der die kleinste Kapazität unter den Kondensatoren (C2 bis C5) der Stromzweige (C2, I2 bis C5, I5) aufweist;
- der erste Blitz der Aufeinanderfolge aus der alleinigen Entladung des zusätzlichen Kondensators (C1) resultiert;
- der zweite Blitz der Aufeinanderfolge aus der gemeinsamen Entladung des zusätzlichen Kondensators (C1) und des ersten Kondensators (C2) der Stromzweige resultiert;
- der dritte Blitz der Aufeinanderfolge aus der gemeinsamen Entladung des zusätzlichen Kondensators (C1) sowie des ersten und zweiten Kondensators (C2, C3) der Stromzweige resultiert;
- auf allgemeine Weise der dazwischenlegende Blitz auf dem Platz i der Aufeinanderfolge (wobei i eine ganze Zahl ist, die kleiner ist als die Anzahl der Blitze der Aufeinanderfolge) aus der gemeinsamen Entladung des zusätzlichen Kondensators (C1) und der i-1 ersten Kondensatoren der Stromzweige resultiert; und
- der letzte Blitz der Aufeinanderfolge aus der gemeinsamen Entladung des zusätzlichen Kondensators (C1) und der Gesamtheit der Kondensatoren der Stromzweige resultiert.

5. Vorrichtung nach einem der Ansprüche 2 bis 4,
**dadurch gekennzeichnet, dass** sie programmierte Steuermittel (16) umfasst, welche die Mittel zur Steuerung (15) der gesteuerten Schalter (I2 bis I5) steuern.

6. Vorrichtung nach Anspruch 5,
**dadurch gekennzeichnet, dass** sie Mittel (18) umfasst, um die programmierten Steuermittel (16) beim Start des beweglichen Objekts (2) zu initialisieren.

7. Vorrichtung nach einem der Ansprüche 5 oder 6,
**dadurch gekennzeichnet, dass** der Zeitraum zwischen zwei aufeinanderfolgenden Lichtblitzen fix und bei allen Blitzen der Aufeinanderfolge gleich ist.

8. Vorrichtung nach einem der Ansprüche 5 oder 6,
**dadurch gekennzeichnet, dass** der Zeitraum zwischen zwei aufeinanderfolgenden Lichtblitzen variabel ist.

9. Vorrichtung nach einem der Ansprüche 2 bis 8, wobei die Blitzlampe (3) von dem Typ ist, der eine Triggerelektrode (8) umfasst,
**dadurch gekennzeichnet, dass** sie einen Höchstspannungsgenerator (9) zur Speisung der Triggerelektrode (8) umfasst und dass der Höchstspannungsgenerator (9) durch die Mittel (15) gesteuert wird, welche die Schalter (I2 bis I5) steuern.
